(19) Europäisches Patentamt
European Patent Office
Office européen des brevets

(11) EP 1 816 153 B1

(12) **EUROPEAN PATENT SPECIFICATION**

(45) Date of publication and mention of the grant of the patent:
**03.08.2011 Bulletin 2011/31**

(21) Application number: **05809682.7**

(22) Date of filing: **22.11.2005**

(51) Int Cl.:
***C08G 63/692*** *(2006.01)* ***C08K 5/5313*** *(2006.01)*
***C08L 67/02*** *(2006.01)*

(86) International application number:
**PCT/JP2005/021413**

(87) International publication number:
**WO 2006/057228 (01.06.2006 Gazette 2006/22)**

(54) **FLAME-RETARDANT POLYESTER AND PROCESS FOR PRODUCING THE SAME**

FLAMMWIDRIGE POLYESTER UND HERSTELLUNGSVERFAHREN DAFÜR

POLYESTER IGNIFUGE ET PROCEDE SERVANT A PRODUIRE CELUI-CI

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.11.2004 JP 2004338951**

(43) Date of publication of application:
**08.08.2007 Bulletin 2007/32**

(73) Proprietor: **Toyo Boseki Kabushiki Kaisha**
**Osaka-shi, Osaka 530-8230 (JP)**

(72) Inventors:
- **FUCHIKAMI, Masaki**
**c/o Toyo Boseki K.K.**
**Tsuruga-shi, Fukui;9148550 (JP)**
- **KOKETSU, Shoji**
**c/o Toyo Boseki K.K.**
**Iwakuni-shi, Yamaguchi;7408567 (JP)**
- **ATSUCHI, Tetsumori**
**c/o Toyo Boseki K.K.**
**Tokyo 1038530 (JP)**
- **SATO, Maki**
**c/o Toyo Boseki K.K.**
**Otsu-shi, Shiga 5200292 (JP)**

(74) Representative: **Müller-Boré & Partner**
**Patentanwälte**
**Grafinger Straße 2**
**81671 München (DE)**

(56) References cited:
**EP-A- 0 494 113**
**EP-A1- 1 541 611**
**JP-A- 63 168 452**
**JP-A- 2001 163 962**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a flame-retardant polyester and a process for producing the same. For further details, the present invention relates to a flame-retardant polyester containing a phosphorus-containing compound of 5000 to 50000 ppm. The polyester of the present invention is provided with flame retardancy and can be utilized for clothing fibers, industrial material fibers, films, engineering plastics and adhesives by extrusion molding and injection molding.

Conventionally, polyester has widely been utilized for various kinds of molded products such as fibers, films and bottles by utilizing excellent chemical and physical properties thereof. However, polyester, particularly, polyethylene terephthalate is insufficient in flame retardancy; therefore, various studies have been made on an improvement in this respect and the addition of a phosphorus compound has been proposed as a method of flameproofing.

For example, the following have been proposed: a method of incorporating a flame retarder during molding, a method of processing a molded product to attach or infiltrate a flame retarder to the surface or inside of the molded product, and a method of adding a flame retarder during polymer production to copolymerize or blend.

Among the above-mentioned methods, a method of providing flame retardancy by processing has a defect such that falling is caused and function is deteriorated. In a method of incorporating a flame retarder, bleedout of a flame retarder is caused in after processing to become a cause of trouble.

On the contrary, a method of copolymerizing a flame retarder during polymer production can overcome defects as described above and is the highest in industrial value.

Many methods have been proposed as this method of copolymerizing a flame retarder; it is disclosed that phosphate as a phosphorus compound is copolymerized with polyester (for example, refer to Patent Document 1), but yet the phosphorus compound is blended up to the amount for providing intended flame retardancy and then gelation of polyester is caused by three-dimensional conversion.

Phosphonic acid or phosphonate is used as a phosphorus compound (for example, refer to Patent Documents 2 and 3), but yet the phosphorus compound is scattered in large quantities during polymer production, so that the intended phosphorus amount can not be blended.

A method of copolymerizing carboxyphosphinic acid is disclosed as a method for solving such a problem (for example, refer to Patent Documents 4 and 5). However, there is a problem that the decrease of polymerization velocity due to a phosphorus compound, darkening and the deterioration of process passage due to reduction of an antimony catalyst, and the poorness of hue due to a yellowish tint of a monomer itself.

Then, a method of improving polymerization velocity and hueofapolymerby combining specific polycondensation catalysts is disclosed (forexample, refer to Patent Document 6) . However, in this method, polymerization velocity can be improved, while the use of a titanium catalyst deteriorates heat stability of a polymer and increases yellowing of the polymer particularly after molding. As a result, hue of the polymer can be improved to some degree, while whiteness itself is not improved and there is a problem that the polymer can not be served for use in which high-degree whiteness is required. Also, there is a problem that hydrolysis resistance of polyester is poor for the reason that a phosphorus atom is incorporated into a polymer main chain.

A phosphorus atom is incorporated into a polymer side chain as a method for solving such a problem (for example, refer to Patent Document 7), but yet a phosphorus compound amount is increased for providing higher-degree flame retardancy and then it takes a substantial time to polymerize; consequently, there is a problem that productivity is remarkably deteriorated.

Patent Document 1: Japanese Examined Patent Publication No. 49-22958
Patent Document 2: Japanese Examined Patent Publication No. 36-21050
Patent Document 3: Japanese Examined Patent Publication No. 38-9447
Patent Document 4: Japanese Examined Patent Publication No. 53-13479
Patent Document 5: Japanese Examined Patent Publication No. 55-41610
Patent Document 6: Japanese Unexamined Patent Publication No. 6-16796
Patent Document 7: Japanese Unexamined Patent Publication No. 2001-163962

An object of the present invention is to solve the above-mentioned problems of the prior art and provide a flame-retardant polyester having high-degree flame retardancy and color tone, and excellent mechanical properties and productivity.

The inventors of the present invention have eventually completed the present invention through various studies for solving the above-mentioned problems.

A flame-retardant polyester comprising ethylene terephthalate as a main constitutional unit and a phosphorus compound copolymerized or blended, wherein polyvalent carboxylic acid and/or polyvalent polyol having three or more

functional groups capable of forming an ester bond are contained therein by a total amount of 0.05 to 2.00 mol (a total of a dicarboxylic acid component, a diol component and the phosphorus compound is 200 mol), that the phosphorus compound having a functional group capable of forming an ester bond is contained therein by an amount of 5000 to 50000 ppm in terms of a phosphorus atom with respect to the polyester, wherein a germanium compound satisfies the following expression (a) as a polycondensation catalyst for said flame-retardant polyester,

$$10 \leq Ge \leq 500 \qquad (a)$$

(Ge denotes the content (ppm) of germanium atoms with respect to the polyester) and that a polyester pellet to be obtained has a b value of -5 to 20, an L value of 35 or more and a melt viscosity at 280°C of 1000 to 20000 dPa·s.

The flame-retardant polyester, wherein the phosphorus compound is the general formula (1).

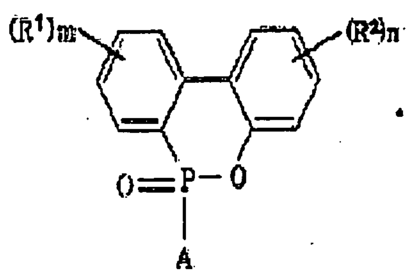

• • • the general formula (1)

(In the formula, $R^1$ and $R^2$ denote an organic group or a halogen atom, and m and n denote an integer of 0 to 4. In the case where m is an integer of 2 to 4, a plurality of $R^1$s may each be the same or different. In the case where n is an integer of 2 to 4, a plurality of $R^2$ s may each be the same or different. A denotes an organic group including two functional groups capable of forming an ester bond.)

The flame-retardant polyester, wherein the phosphorus compound is a 2-carboxylethylphenylphosphinic acid derivative (the general formula (2)).

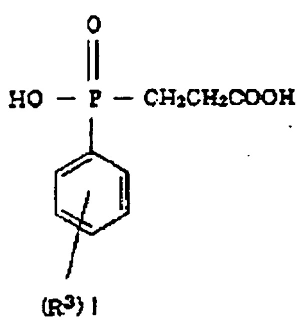

• • • the general formula (2)

(In the formula, $R^3$ denotes an organic group or a halogen atom, and 1 denotes an integer of 0 to 5. In the case where 1 is an integer of 2 to 5, a plurality of $R^3$s may each be the same or different.

The flame-retardant polyester , wherein a cobalt compound is contained while satisfying the following expression (b) or the content of an organic fluorescent whitening agent is 0.0001 to 1% by weight.

$$5 \leq Co \leq 50 \quad (b)$$

(Co denotes the content (ppm) of cobalt atoms with respect to the polyester.)

A process for producing a flame-retardant polyester as defined above, comprising the steps of polymerizing

by a batch polymerization process and extracting the polyester from a polymer can so that ΔIV during extraction becomes 0.03 or less.Here, ΔIV, as described later, signifies the difference of intrinsic viscosity [IV]reduced during 20 minutes from 15 minutes to 35 minutes after starting extraction in the process of extracting polyester.

Thus, in producing a flame-retardant polyester containing a high-concentration phosphorus compound, a flame-retardant polyester having high-degree flame retardancy, favorable color tone and efficient productivity together can be obtained by using a specific phosphorus compound and combining a specific amount of polyvalent carboxylic acid and/or polyvalent polyol.

A method of copolymerizing a large amount of an ester-forming phosphorus compound with polyethylene terephthalate has conventionally been proposed for obtaining high-degree flame retardancy. However, a phosphorus compound amount is increased for providing higher-degree flame retardancy and then there is a problem that not merely a remarkable deterioration in mechanical properties is caused and the original properties of resin are damaged but also operability in producing polyester is deteriorated.

On the contrary, in a producing process of the present invention, a germanium compound is used at a specific ratio and polyvalent carboxylic acid and/or polyvalent polyol components are further used at a specific ratio, so that color tone, mechanical properties and production operability of polyester to be obtained are remarkably improved in cooperation with the effect of improving polycondensation reaction rate and being capable of shortening polycondensation reaction time.

Therefore, polyester having excellent mechanical properties, favorable hue and high-degree flame retardancy can easily be obtained from a flame-retardant polyester according to the present invention, resulting in an extremely high industrial value.

The present invention is hereinafter described in detail. A flame-retardant component in the present invention is not limited if it is generally a compound containing phosphorus; specific examples to be preferably used include

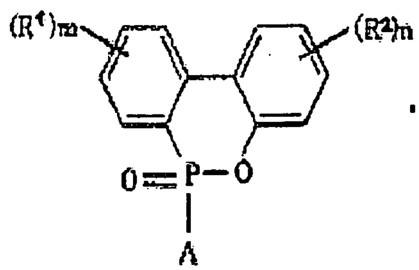

· · · the general formula (1)

(In the formula, $R^1$ and $R^2$ denote an organic group or a halogen atom, and m and n denote an integer of 0 to 4. In the case where m is an integer of 2 to 4, a plurality of $R^1$s may each be the same or different. In the case where n is an integer of 2 to 4, a plurality of $R^2$ s may each be the same or different. A denotes an organic group including two functional groups capable of forming an ester bond.)

The specific examples to be preferably used include

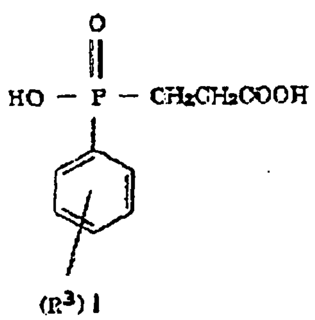

· · · the general formula (2)

(In the formula, $R^3$ denotes an organic group or a halogen atom, and 1 denotes an integer of 0 to 5. In the case where 1 is an integer of 2 to 5, a plurality of $R^3$s may each be the same or different. )

The examples include alkyl ester of these compounds such as methyl ester, ethyl ester, propyl ester, butyl ester, propylene glycol ester and ester with butanediol, cycloalkyl ester, aryl ester, alkylene glycol ester such as ethylene glycol ester, or derivatives thereof such as cyclic acid anhydrides thereof, but yet are not limited thereto. In addition, mixtures thereof can be used.

In the present invention, the use of a phosphorus compound represented by the above-mentioned general formulae (1) and (2) allows excellent flame retardancy to be provided for polyester. However, a phosphorus compound amount is increased for providing higher-degree flame retardancy and then there is a problem that polymerization velocity is remarkably decreased and accordingly not merely a remarkable deterioration in mechanical properties is caused and the original properties of resin are damaged but also productivity in producing polyester is deteriorated. The effect of the present invention is manifested most notably in the case of adding a high-concentration phosphorus compound for providing higher-degree flame retardancy.

In producing polyester of the present invention, the above-mentioned phosphorus compound can be added to the reaction system by dissolving or dispersing in monohydric alcohols such as methanol and ethanol, and dihydric alcohols such as ethylene glycol, propylene glycol and butylene glycol.

In addition, the above-mentioned phosphorus compound is added so that the phosphorus atom amount in polyester is 5000 to 50000 ppm, and it is not preferable that in the case where the amount of the phosphorus compound is less than 5000 ppm, sufficient flame-retardant performance can not exhibit, while in the case where the amount of the phosphorus compound is more than 50000 ppm, not merely the original physical properties of polyester damages but also operability in producing polyester deteriorates. The phosphorus atom amount in polyester is preferably 10000 to 47000 ppm, more preferably 15000 to 44000 ppm, far more preferably 20000 to 42000 ppm and most preferably 30000 to 40000 ppm.

Polyester of the present invention can also be used as a masterbatch by blending with another resin and can contain a phosphorus atom amount at diverse concentrations by changing the ratio of blending in the case of 5000 ppm or more. Conversely, in the case of less than 5000 ppm, it is difficult to provide sufficient flame retardancy.

As described above, in blending for containing an optional phosphorus atom amount, the use of a higher-concentration phosphorus-containing polymer allows physical properties of a polymer as the blending partner to be damaged with difficulty. This is because the use of a high-concentration phosphorus-containing polymer for blending allows the used amount thereof to be decreased.

General examples of polyvalent carboxylic acid (including acid anhydrides) in the present invention are not limited if they are trimellitic acid, ethanetricarboxylic acid, propanetricarboxylic acid, butanetetracarboxylic acid, pyromellitic acid, trimesic acid, 3,4,3',4'-biphenyltetracarboxylic acid and ester-forming derivatives thereof. General examples of a polyvalent polyol component to be used in the present invention include polyvalent polyol having three or more functional groups, such as glycerin, trimethylolethane, trimethylolpropane and pentaerythritol, and yet are not limited thereto. In addition, a specific example to be used most preferably among the above is trimellitic acid. The present invention is explained hereinafter using trimellitic acid as a typical example of polyvalent carboxylic acid/polyvalent polyol.

The copolymerization amount of trimellitic acid is desirably 0.05 to 2.00 mol%; in the case where the copolymerization amount of trimellitic acid in polyester is less than 0.05 mol%, a sufficient function of thickening is not obtained and polymerization time is lengthened during addition of a high-concentration phosphorus compound, so that not merely polymer color is badly affected but also a remarkable deterioration in mechanical properties is caused and additionally recovery as polyester pellets becomes difficult, whereby productivity is deteriorated. Conversely, in the case where trimellitic acid is copolymerized while exceeding 2.00 mol% in polyester, the effect of thickening is so large that gel in a network state is caused, polymerization control becomes difficult and recovery as polyester pellets also becomes difficult, whereby productivity is deteriorated. The copolymerization amount of trimellitic acid is preferably 0.10 to 1.70 mol%, more preferably 0.15 to 1.30 mol%, far more preferably 0.20 to 1.00 mol% and most preferably 0.30 to 0.70 mol%.

In addition, the added amount of trimellitic acid is taken appropriate, specifically, the copolymerization amount of trimellitic acid is determined at 0.05 to 2.00 mol%, so that the effect of thickening is obtained and polycondensation temperature can be lowered. Thermal hysteresis to polyester is decreased by lowering polycondensation temperature, so that color tone of polyester is improved and even in the case of polyester containing the above-mentioned phosphorus atom amount, the b value of polyester pellets thereof can be restrained to a range of 10 to 20. Also, it is possible to reduce a fall in polymerization degree during recovery of polyester pellets after finishing polymerization and an increase in acid ends of polyester, whereby polyester having more excellent heat resistance can be obtained.

As described above, according to the present invention, high flame retardancy is provided by increasing phosphorus content in polyester. However, the increase of phosphorus content lengthens polymerization time to cause a remarkable deterioration in mechanical properties of polyester; therefore, the effect of thickening is provided by copolymerizing polyvalent carboxylic acid. Polyester has a phosphorus content of 5000 to 50000 ppm and a trimellitic acid copolymerization amount of 0.05 to 2.00 mol%. A preferable relation between phosphorus content and trimellitic acid is trimellitic acid of 0.10 to 1.70 mol% in a phosphorus content of 10000 to 47000 ppm, trimellitic acid of 0.15 to 1.30 mol% in a phosphorus content of 15000 to 44000 ppm, trimellitic acid of 0.20 to 1.00 mol% in a phosphorus content of 20000 to 42000 ppm and trimellitic acid of 0.30 to 0.70 mol% in a phosphorus content of 30000 to 40000 ppm from the viewpoint of polymerization velocity and flame retardancy.

In addition, melt viscosity in the present invention signifies a state at a temperature of 280°C as polymerization temperature, and it is preferable to be capable of obtaining as polymer pellets in the case of a melt viscosity of 1000

dPa•s or more. On the contrary, in the case of a melt viscosity of less than 1000 dPa•s, a large amount of fines are caused during casting or cutting can not be performed by too much brittleness to be incapable of taking out as polymer pellets. Conversely, in the case of a melt viscosity of more than 20000 dPa•s, a tendency of gelation is brought, polymer easily remains on the wall of a polymer can and the yield obtained as polymer pellets is remarkably decreased, whereby productivity is deteriorated and additionally dispersion is caused in the particle diameter of polymer pellets. The melt viscosity is preferably 1000 to 15000 dPa•s, more preferably 1500 to 10000 dPa•s, far more preferably 1800 to 7000 dPa•s and most preferably 2000 to 5000 dPa•s.

In a process for obtaining such polyester, special polymerization conditions need not be adopted; dicarboxylic acid and/or ester-forming derivatives thereof, glycol and a reaction product of polyvalent carboxylic acid and/or polyvalent polyol can be subjected to polycondensation and be synthesized by an optional method adopted in making into polyester. The above-mentioned phosphorus compound is added in producing polyester and addition timing thereof is an optional step from the early stage of the esterifying process to the later stage of the initial condensation, and yet the addition is preferably performed from the later stage of the esterifying process to the early stage of the initial condensation in view of the problem of generation of a side reaction product.

In the present invention, germanium compounds and antimony compounds as a polycondensation catalyst can be used in one kind or together at a specific ratio in producing polyester to which the above-mentioned phosphorus compound is added. In the case of using antimony compounds, however, antimony is reduced to decrease polymer color L value and deteriorate color tone. On the contrary, the use of germanium compounds allows color tone improvement, and the L value of the polyester pellets to be converted into 35 or more even in the case of polyester containing the above-mentioned phosphorus atom amount. Specifically, germanium atoms remain in polyester of 10 to 500 ppm. Germanium atoms of less than 10 ppm bring so low polymerization activity that it takes a substantial time to polymerize, whereby color tone and mechanical properties of polyester to be obtained are deteriorated. Meanwhile, germanium atoms of more than 500 ppm bring high costs for the reason that germanium compounds are expensive, which is not preferable. In order to make germanium atoms remain in polyester of 10 to 500 ppm, germanium compounds need to be added during polymerization in consideration of the escape of germanium compounds out of the system in the process of producing polyester. Specifically, germanium compounds need to be added by one to five times the amount to remain, namely, 10 to 2500 ppmas germanium atoms. Germanium atoms remaining in polyester is preferably 10 to 300 ppm, more preferably 10 to 200 ppm, far more preferably 10 to 100 ppm and most preferably 15 to 40 ppm.

The use of cobalt compounds or organic fluorescent whitening agents is effective for further improving color tone of polyester. Examples of the above-mentioned cobalt compounds include cobalt acetate, cobalt chloride, cobalt benzoate and cobalt chromate. Above all, cobalt acetate is preferable. Specifically, cobalt atoms preferably remain of 5 to 50 ppm with respect to polyester. Cobalt atoms of less than 5 ppm do not offer a sufficient effect of improving, and conversely the addition of more than 50 ppm brings too low polymer color b value and a tendency to lower color L value, which is not preferable. The amount to remain prefers to be added during polyester production for the reason that cobalt compounds scarcely escape out of the system in the process of producing polyester. The above-mentioned organic fluorescent whitening agents are preferably benzoxazole compounds such as 4-4'-bis(2-benzoxazolyl)stilbene and 2-5-bis(5-tertiarybutylbenzoxazolyl(2))thiophene, and HostaluxKS (manufactured by Clariant K.K.) is particularly preferable. The added amount thereof is 0.0001 to 1% by weight, and an added amount of less than 0.0001% by weight does not offer a sufficient effect of improving, which is not preferable. Meanwhile, even an added amount of more than 1% by weight does not improve the effect, so that the addition of more than 1% by weight is not necessary. The added amount is more preferably 0.0001 to 0.05% by weight. The above-mentioned organic fluorescent whitening agents may contain bluish dyestuffs intended to improve hue.

In a flame-retardant polyester obtained by using the above-mentioned germanium compounds, if the cobalt compounds satisfy the following expression (b) or the organic fluorescent whitening agents are contained of 0.0001 to 1% by weight,

$$5 \leq Co \leq 50 \quad (b)$$

(Co denotes the content (ppm) of cobalt atoms with respect to polyester.) a flame-retardant polyester having a b value in a range of -5 to 10 and an L value of 50 or more can be obtained. The upper limit of L value is 70 in a flame-retardant polyester of the present invention and it is impossible to exceed 70 in view of the content of phosphorus atoms.

A weatherproofing agent can be contained in polyester of the present invention. A weatherproofing agent allows a thermoplastic resin composition having more excellent colorproofing properties. A weatherproofing agent to be used is preferably at least one kind selected from weatherproofing agents of hindered amine, nitrogen-containing hindered phenol, metallicsalthinderedphenol, phenol, hindered phenol and sulfur. The blended amount of these weatherproofing agents is preferably 10 parts by weight or less with respect to 100 parts by weight of a resin composition after blending

polyester of the present invention with another resin; more preferably 0.001 part by weight or more and 10 parts by weight or less, far more preferably 0.01 part by weight or more and 1 part by weight or less.

In the present invention, addition timing of the above-mentioned polycondensation catalyst also prefers to be in conformance with conventionally known methods and is not particularly limited if it is before starting polycondensation reaction. A method in conformance with conventionally known methods is preferably a production process of first making a low polymer (an oligomer) generally by transesterification reaction or esterification reaction to subsequently obtain a high polymer by polycondensation reaction. Conventionally known continuous processes such as batch type and multi can type can be applied to production equipment.

When polyester is extracted after finishing polymerization, polyester generated in a reactor is extracted as a strand and made into tips by using a refrigerant such as water. The inclusion of phosphorus at high concentration as in the present invention causes the decrease of molecular weight to be more notable during the casting process. The increase of casting rate and extraction rate allows these to be prevented and yet a more effective method is as follows. For example, in the process of extracting polyester, extraction of polyester is performed at lower temperature than final ultimate temperature of polyester in a polycondensation reactor, or extraction of polyester is performed at pressure not more than atmospheric pressure in a polycondensation reactor in addition thereto, so that the decrease of polyester molecular weight in the process of extracting polyester can be reduced. Preferable pressure conditions are 66.65 kPa or less, more preferably 39.99 kPa or less, far more preferably 13. 33 kPa or less and most preferably 0 to 0.6 kPa or less. Preferable temperature conditions are lower by 5˚C than polymerization temperature, more preferably lower by 10 ˚C, so that the decrease of polyester molecular weight can be reduced. The decrease of polyester molecular weight in the process of extracting polyester in the present invention signifies the difference of intrinsic viscosity [IV] reduced during 20 minutes from 15 minutes to 35 minutes after starting extraction. Naturally, this difference of [IV] is preferably small, such as 0.03, more preferably 0.02 or less. Thus, no difference of [IV] can uniformize polymerization degree of polyester extracted from the reactor, whereby operability during after processing becomes favorable.

In a process for producing a flame-retardant polyester according to the present invention, generally used additives can also be added together: basic salts such as sodium acetate and lithium acetate, titanium dioxide as flatting agent, pigment such as carbon black, plasticizer, stabilizer, antistatic agent, orthochromatic agent, tetraethylammonium hydroxide as ether linkage inhibitor, organic amine (such as triethylamine), organic carboxylic amide and other flame-retardant assistants.

Polyester having ethylene terephthalate as the main constitutional unit in the present invention is such that 60 mol% or more of repeating constitutional units are ethylene terephthalate and raw components are terephthalic acid or dimethyl terephthalate, ethylene glycol or ethylene oxide. With regard to copolymerization components, trimellitic acid, pyromellitic acid and phosphorus compounds represented by the above-mentioned general formula (1) or (2) are used as polyvalent carboxylic acid, and additionally the following can also be used in a range of not deteriorating the effect of the present invention: aromatic dicarboxylic acids and derivatives thereof such as isophthalic acid, 1,5-naphthalenedicarboxylic acid, 2,6-naphthalenedicarboxylic acid, 5-sodium sulfoisophtalate, 4,4'-diphenyldicarboxylic acid, bis(4-carboxyphenyl)ether, bis(4-carboxyphenyl)sulfone, 1,2-bis(4-carboxyphenoxy)ethane, 2,5-dibromoterephthalate and tetrabromoterephthalate, aliphatic and alicyclic dicarboxylic acids and derivatives thereof such as adipic acid, sebacic acid, azelaic acid and hexahydroterephthalic acid, or mixtures thereof. On the other hand, the following can also be used: glycols such as trimethylene glycol, tetramethylene glycol, neopentyl glycol, 1,4-cyclohexanediol, 1,4-cyclohexanedimethanol, diethylene glycol and polyethylene glycol, oxycarboxylic acids and derivatives thereof such as para-hydroxybenzoic acid, para-hydroxyethoxybenzoic acid and oxypivalic acid, or mixtures thereof.

In addition, a further improvement in flame-retardant performance is optionally intended by combining with known flame retarders. The combination herein includes a method of adding a flame retarder during polyester production to copolymerize or blend, a method of incorporating a flame retarder during molding, and a method of after-processing a polyester molded product to attach or infiltrate a flame retarder to the surface or inside thereof, for example. Examples of blend-type flame retarders include halogen flame retarders, for example, bromine compounds such as tetrabromobisphenol (TBA) , decabromodiphenyl oxide (DBDPO), hexabromocyclododecane (HBCD), octabromodiphenyl oxide, bistribromophenoxyethane (BTBPE), tribromophenol (TBP), ethylenebistetrabromophthalimide, TBA polycarbonate oligomer, brominated polystyrene, TBA epoxy oligomer polymer, decabromodiphenylethane, polydibromophenyl oxide and hexabromobenzene, and chlorine compounds such as chlorinated paraffin and perchlorocyclopentadecane; alternatively, organic flame retarders, for example, phosphorus flame retarders such as phosphates, halogen-containing phosphates, polyphosphates and red phosphorus, silicone flame retarders such as silicone polymer powder, triazine compounds, melanin cyanurate, and guanidine compounds; additionally, inorganic flame retarders such as antimony trioxide, aluminum hydroxide, nitroguanidine, antimony pentoxide, magnesium hydroxide, zincborate, zirconium compounds, calcium aluminate, ammonium phosphate, ammonium carbonate, molybdenum compounds and zinc stannate. The above-mentioned flame retarders are not limited to the descriptions but include derivatives and analogs thereof. These flame retarders may be used singly or plurally. The polyester of the present invention can also be used with resin singly as fibers, films, various molding materials, coating agents and adhesives, in which case diverse addition agents

in accordance with various kinds of uses can be used. The polyester of the present invention contains phosphorus at high concentration and can also be used for each of the above-mentioned uses as a flame-retardant polyester composition by mixing with another polyester.

EXAMPLES

The present invention is hereinafter described more specifically by using examples and is not limited thereto. The polymerization test result shown in examples and comparative examples is a result on the condition that polymerization time is all made equal, and it is understood that higher intrinsic viscosity brings higher polymerization velocity. In examples, part and% signify part by weight and% by weight, respectively. Various kinds of properties were evaluated by the following methods.
In addition, compounds in examples and comparative examples are as follows; the phosphorus compound (i) and the phosphorus compound (ii) correspond to the general formula (1) and the general formula (2), respectively.
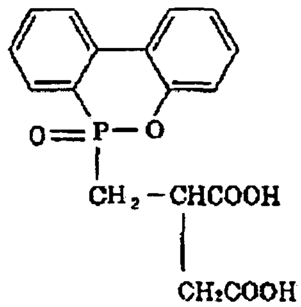

· · · (i)

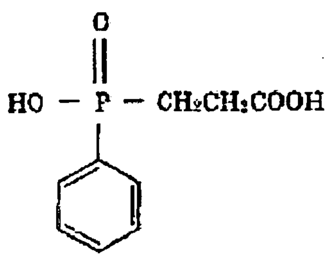

· · · (ii)

(1) Intrinsic viscosity [IV]

Polyester 15 minutes after extracting from a polymerizer was measured in mixed solvent of phenol/1,1,2,2-tetrachloroethane (a weight ratio of 3:2) at a temperature of 30˚C to calculate intrinsic viscosity from relative viscosity thereof by an ordinary method.

(2) The decreased amount [ΔIV]

of polyester molecular weight signifies the difference of intrinsic viscosity [IV]
reduced during 20 minutes from 15 minutes to 35 minutes after starting extraction in the process of extracting polyester.

(3) Melt viscosity [MV]

Melt viscosity is a melt viscosity in a shear rate of 60 $sec^{-1}$ measured at a furnace temperature of 280˚C, an orifice thickness of 5.0 mm and a die diameter of 1.0 mm by using Capirography manufactured by Toyo Seiki Seisaku-sho, Ltd. The detailed measuring method is such that polyester tips are filled into a furnace so swiftly as not to be pyrolyzed and so closely without any gaps as not to contain air. In addition, melted polyester in the furnace is carried away by approximately 1/10 of a furnace length to thereafter start the measurement.

(4) Color tone (L value and b value)

Color L value and color b value for representing polymer color are values measured by using Model 1001DP manufactured by NIPPON DENSHOKU INDUSTRIES CO., LTD.; larger color L value denotes higher whiteness and larger color b value denotes stronger yellowish tint. That is, larger L value and smaller b value denote more favorable color tone. The detailed measuring method was such that polyester tips were put in a cell made of glass to eight-tenths so that a lustrous plane thereof was at the bottom; in addition, the cell was lightly shaken and closely filled therewith to thereafter add resin so as to put a cap, and then put the cap; the cell filled with the tips was put on a test bench and measured; and the measurement was performed three times while refilled with the tips every time the cell was measured once to calculate average thereof.

(5) Each element content

Ultimate analysis was performed by the following method to determine the content of antimony atoms, germanium atoms, cobalt atoms and phosphorus atoms with respect to polyester.

(a) Antimony compounds

1 g of a sample was subjected to wet digestion in mixed liquid of sulfuric acid/hydrogen peroxide water. Subsequently, sodium nitrite was added thereto to convert Sb atoms into $Sb^{+-}$ and generate a blue complex with Sb by adding brilliant green. This complex was extracted with toluene to thereafter measure absorbance at a wavelength of 625 nm by using an absorptiometer (UV-150-02, manufactured by SHIMADZU CORPORATION), and subject Sb atoms in the sample to colorimetric determination from a calibration curve previously made.

(b) Germanium compounds

2 g of a sample was put in a platinum crucible, subjected to incineration decomposition and further evaporated by adding 5 ml of 10% by mass-sodium hydrogen carbonate solution, and subsequently evaporated to dryness by adding hydrochloric acid. The sample was heated up in an electric furnace from 400˚C to 950˚C and stood for 30 minutes to fuse the residual. The melt was heated up and dissolved in 10 ml of water, and moved to a distillation apparatus. The platinum crucible was washed twice in 7.5 ml of ion-exchange water to also move this washed liquid to the above-mentioned distillation apparatus. Subsequently, 35 ml of hydrochloric acid was added thereto and distilled to obtain 25 ml of distillate. A proper amount was batched off the distillate to add hydrochloric acid so that the end concentration was 1.0 to 1.5 mol/L. In addition, 2. 5 ml of 0. 25% by mass-polyvinyl alcohol solution and 5 ml of 0.04% by mass-phenylfluorene (2,3,7-trihydroxy-9-phenyl-6-fluorene) were added thereto and made into 25 ml with ion-exchange water. With regard to the generated yellow complex with Ge, absorbance at a wavelength of 505 nm was measured by an absorptiometer (UV-150-02, manufactured by SHIMADZU CORPORATION). Ge atoms in the sample were subjected to colorimetric determination from a calibration curve previously made.

(c) Cobalt compounds

1 g of a sample was subjected to incineration decomposition in a platinum crucible and evaporated to dryness by adding 6 mol/L-hydrochloric acid. This was dissolved in 1.2 mol/L-hydrochloric acid to measure emission intensity by using an ICP emission analyzer (ICPS-2000, manufactured by SHIMADZU CORPORATION). Co atoms in the sample were subjected to determination from a calibration curve previously made.

(d) Phosphorus compounds

With regard to 1 g of a sample, phosphorus compounds were made into orthophosphoric acid by a method of subjecting to dry incineration decomposition under the coexistence of sodium carbonate, or a method of subjecting to wet digestion in mixed liquid of sulfuric acid/nitric acid/perchloric acid or mixed liquid of sulfuric acid/hydrogen peroxide water. Subsequently, molybdate was reacted in 1 mol/L-sulfuric acid solution and made into phosphomolybdic acid, which was reduced with hydrazine sulfate to generate heteropolyblue. Absorbance at a wavelength of 830 nm was measured by an absorptiometer (UV-150-02, manufactured by SHIMADZU CORPORATION). Phosphorus atoms in the

sample were subjected to determination from a calibration curve previously made.

(6) Casting operability

Casting operabilitysignifiesworksuch that polyester generated in a reactor is extracted as a strand and made into tips by using a refrigerant such as water, in conformance with conventionally known methods to perform the following two-stage evaluation. ○: tips can be recovered without problem x: fines are contained in large quantities or tips can not be recovered

(7) Flame retardancy evaluation (LOI value)

Flame retardancy limiting oxygen index (LOI value) was measured and evaluated in accordance with an ordinary method.

Example 1

825 parts of terephthalic acid, 4 parts of trimellitic acid, 1006 parts of the phosphorus compound (i) (as 50% -ethylene glycol solution) and 297 parts of ethylene glycol were charged into a stainless-steel autoclave provided with a stirrer, a distillation column and a pressure regulator (this equipment was used for all of the following experiments) to further add 0.324 part of germanium dioxide and 2.1 parts of triethylamine thereto and perform esterification reaction at a temperature of 245˚C and a gage pressure of 2.5 kg/cm$^2$ for 2 hours while sequentially removing water generated in the esterification. Subsequently, the temperature of the system was heated up to 280 ˚C in 1 hour to gradually reduce the pressure of the system to 0.1 mmHg in the meantime, and perform polycondensation reaction for 105 minutes under this condition. The phosphorus content of the obtained polymer was 30000 ppm such as to exhibit favorable flame retardancy. The intrinsic viscosity thereof was as high as 0.56 dl/g though phosphorus was contained at high concentration. That is, it was signified that polymerization velocity was high. The melt viscosity of the polymer was 1440 dPa•s and casting operability was easy. In addition, the color tone of the polymer was favorable. The casting conditions were such that the inside of the reactor was decompressed to 13.33 kPa at a temperature of 280˚C to extract the polymer, and ΔIV was 0.03. The results are shown in Table 1.

Example 2

825 parts of terephthalic acid, 4 parts of trimellitic acid, 1006 parts of the phosphorus compound (i) (as 50%-ethylene glycol solution) and 297 parts of ethylene glycol were charged into a stainless-steel autoclave provided with a stirrer, a distillation column and a pressure regulator (this equipment was used for all of the following experiments) to further add 0.324 part of germanium dioxide and 2.1 parts of triethylamine thereto and perform esterification reaction at a temperature of 245˚C and a gage pressure of 2.5 kg/cm$^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 30000 ppm such as to exhibit favorable flame retardancy. The intrinsic viscosity thereof was as high as 0.57 dl/g though phosphorus was contained at high concentration. That is, it was signified that polymerization velocity was high. The melt viscosity of the polymer was 1490 dPa•s and casting operability was easy. In addition, the color tone of the polymer was favorable. The casting conditions were such that the inside of the reactor was determined at a temperature of 280˚C and a nitrogen pressurization of 0.2 MPa to extract the polymer, and ΔIV was 0.04. The results are shown in Table 1.

Example 3

821 parts of terephthalic acid, 7 parts of trimellitic acid, 1005 parts of the phosphorus compound (i) (as 50%-ethylene glycol solution) and 296 parts of ethylene glycol were charged into a stainless-steel autoclave to further add 0.324 part of germanium dioxide and 2.1 parts of triethylamine thereto and perform esterification reaction at a temperature of 245˚C and a gage pressure of 2.5 kg/cm$^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 30000 ppm such as to exhibit favorable flame retardancy. The intrinsic viscosity thereof was as high as 0.89 dl/g though phosphorus was contained at high concentration. That is, it was signified that polymerization velocity was high. The melt viscosity of the polymer was 16780 dPa•s and casting operability was easy. In addition, the color tone of the polymer was favorable. The casting conditions were such that the inside of the

reactor was decompressed to 13.33 kPa at a temperature of 280˚C to extract the polymer, and ΔIV was 0.03. The results are shown in Table 1.

Example 4

671 parts of terephthalic acid, 6 parts of trimellitic acid, 1347 parts of the phosphorus compound (i) (as 50%-ethylene glycol solution) and 73 parts of ethylene glycol were charged into a stainless-steel autoclave to further add 0.324 part of germanium dioxide and 2.0 parts of triethylamine thereto and perform esterification reaction at a temperature of 245˚C and a gage pressure of 2.5 kg/$cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 40000 ppm such as to exhibit favorable flame retardancy. The intrinsic viscosity thereof was as high as 0.59 dl/g though phosphorus was contained at high concentration. That is, it was signified that polymerization velocity was high. The melt viscosity of the polymer was 2070 dPa•s and casting operability was easy. In addition, the color tone of the polymer was favorable. The casting conditions were such that the inside of the reactor was decompressed to 13.33 kPa at a temperature of 275˚C to extract the polymer, and ΔIV was 0.02. The results are shown in Table 1.

Example 5

823 parts of terephthalic acid, 6 parts of trimellitic acid, 1005 parts of the phosphorus compound (i) (as 50%-ethylene glycol solution) and 297 parts of ethylene glycol were charged into a stainless-steel autoclave to further add 0.324 part of germanium dioxide and 0.127 part of cobalt acetate tetrahydrate and 2.1 parts of triethylamine thereto and perform esterification reaction at a temperature of 245˚C and a gage pressure of 2.5 kg/$cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 30000 ppm such as to exhibit favorable flame retardancy. The intrinsic viscosity thereof was as high as 0.56 dl/g though phosphorus was contained at high concentration. That is, it was signified that polymerization velocity was high. The melt viscosity of the polymer was 1440 dPa•s and casting operability was easy. In addition, the color tone of the polymer was favorable. The casting conditions were such that the inside of the reactor was decompressed to 13.33 kPa at a temperature of 280˚C to extract the polymer, and ΔIV was 0.03. The results are shown in Table 1.

Example 6

817 parts of terephthalic acid, 12 parts of trimellitic acid, 1004 parts of the phosphorus compound (i) (as 50%-ethylene glycol solution) and 296 parts of ethylene glycol were charged into a stainless-steel autoclave to further add 0.324 part of germanium dioxide and 0.15 part of HostaluxKS and 2.1 parts of triethylamine thereto and perform esterification reaction at a temperature of 245˚C and a gage pressure of 2.5 kg/$cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 30000 ppm such as to exhibit favorable flame retardancy. The intrinsic viscosity thereof was as high as 0.91 dl/g though phosphorus was contained at high concentration. That is, it was signified that polymerization velocity was high. The melt viscosity of the polymer was 18760 dPa•s and casting operability was easy. In addition, the color tone of the polymer was favorable. The casting conditions were such that the inside of the reactor was decompressed to 13.33 kPa at a temperature of 280˚C to extract the polymer, and ΔIV was 0.03. The results are shown in Table 1.

Example 7

1056 parts of terephthalic acid, 6 parts of trimellitic acid, 502 parts of the phosphorus compound (i) (as 50%-ethylene glycol solution) and 632 parts of ethylene glycol were charged into a stainless-steel autoclave to further add 0.324 part of germanium dioxide and 2.1 parts of triethylamine thereto and perform esterification reaction at a temperature of 245˚C and a gage pressure of 2.5 kg/$cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 15000 ppm such as to exhibit favorable flame retardancy. The intrinsic viscosity thereof was as high as 0. 65 dl/g though phosphorus was contained at high concentration. That is, it was

signified that polymerization velocity was high. The melt viscosity of the polymer was 3780 dPa•s and casting operability was easy. In addition, the color tone of the polymer was favorable. The casting conditions were such that the inside of the reactor was decompressed to 13.33 kPa at a temperature of 280˚C to extract the polymer, and ΔIV was 0.02. The results are shown in Table 1.

Comparative Example 1

829 parts of terephthalic acid, 1006 parts of the phosphorus compound (i) (as 50%-ethylene glycol solution) and 297 parts of ethylene glycol were charged into a stainless-steel autoclave to further add 0.324 part of germanium dioxide and 2.1 parts of triethylamine thereto and perform esterification reaction at a temperature of 245˚C and a gage pressure of 2.5 kg/cm$^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 30000 ppm and the intrinsic viscosity thereof was as low as 0.45 dl/g such as to signify that polymerization velocity was low. The melt viscosity of the polymer was 480 dPa•s and casting was so difficult that the polymer was barely obtained in tips and yet a large amount of powdery fines were contained, whereby processability was deteriorated in after processing. The casting conditions were such that the inside of the reactor was determined at a temperature of 275˚C and a nitrogen pressurization of 0.2 MPa to extract the polymer, and ΔIV was 0.03. The results are shown in Table 1.

Comparative Example 2

829 parts of terephthalic acid 0.4 part of trimellitic acid, 1006 parts of the phosphorus compound (i) (as 50%-ethylene glycol solution) and 297 parts of ethylene glycol were charged into a stainless-steel autoclave to further add 0.324 part of germanium dioxide and 2.1 parts of triethylamine thereto and perform esterification reaction at a temperature of 245˚C and a gage pressure of 2.5 kg/cm$^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 30000 ppm and the intrinsic viscosity thereof was as low as 0.47 dl/g such as to signify that polymerization velocity was low. The melt viscosity of the polymer was 680 dPa•s and casting was so difficult that the polymer was barely obtained in tips and yet a large amount of powdery fines were contained, whereby processability was deteriorated in after processing. The casting conditions were such that the inside of the reactor was decompressed to 13.33 kPa at a temperature of 275˚C to extract the polymer, and ΔIV was 0.02. The results are shown in Table 1.

Comparative Example 3

1234 parts of terephthalic acid, 134 parts of the phosphorus compound (i) (as 50%-ethylene glycol solution) and 879 parts of ethylene glycol were charged into a stainless-steel autoclave to further add 0.611 part of antimony trioxide and 2.3 parts of triethylamine thereto and perform esterification reaction at a temperature of 245˚C and a gage pressure of 2.5 kg/cm$^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The intrinsic viscosity of the obtained polymer was 0.60 dl/g, the phosphorus content thereof was 4000 ppm, and the melt viscosity of the polymer was 2320 dPa•s and casting operability was easy but yet flame retardancy (LOI value) was somewhat poor. The casting conditions were such that the inside of the reactor was determined at a temperature of 280˚C and a nitrogen pressurization of 0.2 MPa to extract the polymer, and ΔIV was 0.03. The results are shown in Table 1.

Comparative Example 4

668 parts of terephthalic acid, 13 parts of pyromellitic acid , 1352 parts of the phosphorus compound (i) (as 50%-ethylene glycol solution) and 73 parts of ethylene glycol were charged into a stainless-steel autoclave to further add 0.611 part of antimony trioxide and 2.1 parts of triethylamine thereto and perform esterification reaction at a temperature of 245˚C and a gage pressure of 2.5 kg/cm$^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The intrinsic viscosity of the obtained polymer was 0.87 dl/g, the phosphorus content thereof was 40000 ppm, and the melt viscosity of the polymer was 14260 dPa•s and casting operability was easy but yet the color tone of

the polymer was poor. The casting conditions were such that the inside of the reactor was determined at a temperature of 280˚C and a nitrogen pressurization of 0.2 MPa to extract the polymer, and ΔIV was 0.06. The results are shown in Table 1.

Comparative Example 5

792 parts of terephthalic acid ,37 parts of trimellitic acid , 1001 parts of the phosphorus compound (i) (as 50%-ethylene glycol solution) and 295 parts of ethylene glycol were charged into a stainless-steel autoclave to further add 0.324 part of germanium dioxide and 2.0 parts of triethylamine thereto and perform esterification reaction at a temperature of 245˚C and a gage pressure of 2.5 kg/$cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The obtained polymer was gelated and could not be taken out of a polymer can. The results are shown in Table 1.

Comparative Example 6

1258 parts of terephthalic acid, 84 parts of the phosphorus compound (i) (as 50%-ethylene glycol solution) and 913 parts of ethylene glycol were charged into a stainless-steel autoclave to further add 0.324 part of germanium dioxide and 2.1 parts of triethylamine thereto and perform esterification reaction at a temperature of 245˚C and a gage pressure of 2.5 kg/$cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The intrinsic viscosity of the obtained polymer was 0. 67 dl/g, the phosphorus content thereof was 2500 ppm, and the melt viscosity of the polymer was 3610 dPa•s and casting operability was easy and the color tone of the polymer was favorable but yet flame retardancy (LOI value) was poor. The casting conditions were such that the inside of the reactor was determined at a temperature of 280 ˚C and a nitrogen pressurization of 0.2 MPa to extract the polymer, and ΔIV was 0.02. The results are shown in Table 1.

Example 8

889 parts of terephthalic acid, 7 parts of trimellitic acid, 311 parts of the phosphorus compound (ii) and 906 parts of ethylene glycol were charged into a stainless-steel autoclave to further add 0.324 part of germanium dioxide and 2.1 parts of triethylamine thereto and perform esterification reaction at a temperature of 245˚C and a gage pressure of 2.5 kg/$cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 30000 ppm such as to exhibit favorable flame retardancy. The intrinsic viscosity thereof was as high as 0.59 dl/g though phosphorus was contained at high concentration. That is, it was signified that polymerization velocity was high. The melt viscosity of the polymer was 1840 dPa•s and casting operability was easy. In addition, the color tone of the polymer was favorable. The casting conditions were such that the inside of the reactor was decompressed to 13.33 kPa at a temperature of 280˚C to extract the polymer, and ΔIV was 0.03. The results are shown in Table 1.

Example 9

889 parts of terephthalic acid, 7 parts of trimellitic acid, 311 parts of the phosphorus compound (ii) and 906 parts of ethylene glycol were charged into a stainless-steel autoclave to further add 0.324 part of germanium dioxide and 2.1 parts of triethylamine thereto and perform esterification reaction at a temperature of 245˚C and a gage pressure of 2.5 kg/$cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 30000 ppm such as to exhibit favorable flame retardancy. The intrinsic viscosity thereof was as high as 0.58 dl/g though phosphorus was contained at high concentration. That is, it was signified that polymerization velocity was high. The melt viscosity of the polymer was 1780 dPa•s and casting operability was easy. In addition, the color tone of the polymer was favorable. The casting conditions were such that the inside of the reactor was determined at a temperature of 280˚C and a nitrogen pressurization of 0.2 MPa to extract the polymer, and ΔIV was 0.04. The results are shown in Table 1.

Example 10

958 parts of terephthalic acid, 14 parts of trimellitic acid, 310parts of the phosphorus compound (ii) and 905 parts of ethylene glycol were charged into a stainless-steel autoclave to further add 0.324 part of germanium dioxide and 2.1 parts of triethylamine thereto and perform esterification reaction at a temperature of 245˚C and a gage pressure of 2.5 $kg/cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 30000 ppm such as to exhibit favorable flame retardancy. The intrinsic viscosity thereof was as high as 0.91 dl/g though phosphorus was contained at high concentration. That is, it was signified that polymerization velocity was high. The melt viscosity of the polymer was 18760 dPa•s and casting operability was easy. In addition, the color tone of the polymer was favorable. The casting conditions were such that the inside of the reactor was decompressed to 13.33 kPa at a temperature of 280˚C to extract the polymer, and ΔIV was 0.03. The results are shown in Table 1.

Example 11

862 parts of terephthalic acid, 8 parts of pyromellitic acid , 417 parts of the phosphorus compound (ii) and 890 parts of ethylene glycol were charged into a stainless-steel autoclave to further add 0.324 part of germanium dioxide and 2.1 parts of triethylamine thereto and perform esterification reaction at a temperature of 245˚C and a gage pressure of 2.5 $kg/cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 40000 ppm such as to exhibit favorable flame retardancy. The intrinsic viscosity thereof was as high as 0.60 dl/g though phosphorus was contained at high concentration. That is, it was signified that polymerization velocity was high. The melt viscosity of the polymer was 2290 dPa•s and casting operability was easy. The casting conditions were such that the inside of the reactor was decompressed to 13.33 kPa at a temperature of 275˚C to extract the polymer, and ΔIV was 0.02. The results are shown in Table 1.

Example 12

889 parts of terephthalic acid, 7 parts of trimellitic acid, 311 parts of the phosphorus compound (ii) and 906 parts of ethylene glycol were charged into a stainless-steel autoclave to further add 0.324 part of germanium dioxide 0.127 part of cobalt acetate tetrahydrate and 2.1 parts of triethylamine thereto and perform esterification reaction at a temperature of 245˚C and a gage pressure of 2.5 $kg/cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 30000 ppm such as to exhibit favorable flame retardancy. The intrinsic viscosity thereof was as high as 0.59 dl/g though phosphorus was contained at high concentration. That is, it was signified that polymerization velocity was high. The melt viscosity of the polymer was 1840 dPa•s and casting operability was easy. In addition, the color tone of the polymer was favorable. The casting conditions were such that the inside of the reactor was decompressed to 13.33 kPa at a temperature of 280˚C to extract the polymer, and ΔIV was 0.02. The results are shown in Table 1.

Example 13

958 parts of terephthalic acid, 14 parts of trimellitic acid, 310 parts of the phosphorus compound (ii) and 905 parts of ethylene glycol were charged into a stainless-steel autoclave to further add 0.324 part of germanium dioxide and 0.15 part of HostaluxKS and 2.1 parts of triethylamine thereto and perform esterification reaction at a temperature of 245˚C and a gage pressure of 2.5 $kg/cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 30000 ppm such as to exhibit favorable flame retardancy. The intrinsic viscosity thereof was as high as 0. 90 dl/g though phosphorus was contained at high concentration. That is, it was signified that polymerization velocity was high. The melt viscosity of the polymer was 17860 dPa•s and casting operability was easy. The casting conditions were such that the inside of the reactor was determined at a temperature of 280 ˚C and a nitrogen pressurization of 0.2 MPa to extract the polymer, and ΔIV was 0.04. The results are shown in Table 1.

Comparative Example 7

972 parts of terephthalic acid, 311 parts of the phosphorus compound (ii)and 907 parts of ethylene glycol were charged into a stainless-steel autoclave to further add 0.324 part of germanium dioxide and 2.1 parts of triethylamine thereto and perform esterification reaction at a temperature of 245˚C and a gage pressure of 2.5 $kg/cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 30000 ppm and the intrinsic viscosity thereof was as low as 0.48 dl/g such as to signify that polymerization velocity was low. The melt viscosity of the polymer was 720 dPa•s and casting was so difficult that the polymer was barely obtained in tips and yet a large amount of powdery fines were contained, whereby processability was deteriorated in after processing. The casting conditions were such that the inside of the reactor was determined at a temperature of 275˚C and a nitrogen pressurization of 0.2 MPa to extract the polymer, and ΔIV was 0.03. The results are shown in Table 1.

Comparative Example 8

987 parts of terephthalic acid, 0.5 part of pyromellitic acid , 311 parts of the phosphorus compound (ii)and 907 parts of ethylene glycol were charged into a stainless-steel autoclave to further add 0.324 part of germanium dioxide and 2.1 parts of triethylamine thereto and perform esterification reaction at a temperature of 245˚C and a gage pressure of 2.5 $kg/cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The phosphorus content of the obtained polymer was 30000 ppm and the intrinsic viscosity thereof was as low as 0. 49 dl/g such as to signify that polymerization velocity was low. The melt viscosity of the polymer was 870 dPa•s and casting was so difficult that the polymer was barely obtained in tips and yet a large amount of powdery fines were contained, whereby processability was deteriorated in after processing. The casting conditions were such that the inside of the reactor was decompressed to 13.33 kPa at a temperature of 280˚C to extract the polymer, and ΔIV was 0.02. The results are shown in Table 1.

Comparative Example 9

1423 parts of terephthalic acid, 41 parts of the phosphorus compound (ii) and 956 parts of ethylene glycol were charged into a stainless-steel autoclave to further add 0. 611 part of antimony trioxide and 2.1 parts of triethylamine thereto and perform esterification reaction at a temperature of 245˚C and a gage pressure of 2.5 $kg/cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The intrinsic viscosity of the obtained polymer was 0.64 dl/g, the phosphorus content thereof was 4000 ppm, and the melt viscosity of the polymer was 2910 dPa•s and casting operability was easy but yet flame retardancy (LOI value) was somewhat poor. The casting conditions were such that the inside of the reactor was determined at a temperature of 280˚C and a nitrogen pressurization of 0.2 MPa to extract the polymer, and ΔIV was 0.03. The results are shown in Table 1.

Comparative Example 10

860 parts of terephthalic acid, 16 parts of pyromellitic acid, 419 parts of the phosphorus compound (ii) and 894 parts of ethylene glycol were charged into a stainless-steel autoclave to further add 0.611 part of antimony trioxide and 2.1 parts of triethylamine thereto and perform esterification reaction at a temperature of 245˚C and a gage pressure of 2.5 $kg/cm^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The intrinsic viscosity of the obtained polymer was 0.90 dl/g, the phosphorus content thereof was 40000 ppm, and the melt viscosity of the polymer was 17560 dPa•s and casting operability was easy but yet the color tone of the polymer was poor. The casting conditions were such that the inside of the reactor was determined at a temperature of 280˚C and a nitrogen pressurization of 0.2 MPa to extract the polymer, and ΔIV was 0.06. The results are shown in Table 1.

Comparative Example 11

928 parts of terephthalic acid, 42 parts of trimellitic acid , 308 parts of the phosphorus compound (ii) and 897 parts of ethylene glycol were charged into a stainless-steel autoclave to further add 0. 324 part of germanium dioxide

and 2.1 parts of triethylamine thereto and perform esterification reaction at a temperature of 245˚C and a gage pressure of 2.5 kg/cm$^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition. The obtained polymer was gelated and could not be taken out of a polymer can. The results are shown in Table 1.

Comparative Example 12

1270 parts of terephthalic acid, 26 parts of the phosphorus compound (ii) and 964 parts of ethylene glycol were charged into a stainless-steel autoclave to further add 0.324 part of germanium dioxide and 0.19 part of cobalt acetate tetrahydrate and 2.1 parts of triethylamine thereto and perform esterification reaction at a temperature of 245˚C and a gage pressure of 2.5 kg/cm$^2$ for 2 hours while sequentially removing water generated in the esterification. Subsequently, the temperature of the system was heated up to 280˚C in 1 hour to gradually reduce the pressure of the system to 0.1 mmHg in the meantime, and perform polycondensation reaction for 105 minutes under this condition.
The intrinsic viscosity of the obtained polymer was 0.68 dl/g, the phosphorus content thereof was 2500 ppm, and the melt viscosity of the polymer was 4090 dPa•s and casting operability was easy and the color tone of the polymer was favorable but yet flame retardancy (LOI value) was poor. The casting conditions were such that the inside of the reactor was determined at a temperature of 280˚C and a nitrogen pressurization of 0.2 MPa to extract the polymer, and ΔIV was 0.02. The results are shown in Table 1.

[Table 1]

| | Sb | Ge | P | Co | KS | pyromellitic acid | trimellitic acid | IV | melt viscosity | polymer color | | casting operability | LOI |
|---|---|---|---|---|---|---|---|---|---|---|---|---|---|
| | (ppm) | (ppm) | (ppm) | (ppm) | (wt%) | (mol%) | (mol%) | (dl/g) | (dPa·s) | L value | b value | | (%) |
| Example 1 | - | 34 | 30000 | - | - | - | 0.3 | 0.56 | 1440 | 41 | 17.7 | ○ | 29 |
| Example 2 | - | 32 | 30000 | - | - | - | 0.3 | 0.57 | 1490 | 40.8 | 16.8 | ○ | 29 |
| Example 3 | - | 33 | 30000 | - | - | - | 0.7 | 0.89 | 16780 | 42.6 | 18.8 | ○ | 29 |
| Example 4 | - | 34 | 40000 | - | - | 0.5 | - | 0.59 | 2070 | 42.1 | 18.7 | ○ | 30 |
| Example 5 | - | 34 | 30000 | 20 | - | - | 0.5 | 0.56 | 1440 | 57.7 | 3.4 | ○ | 29 |
| Example 6 | - | 33 | 30000 | - | 0.1 | - | 1.0 | 0.91 | 18760 | 58.1 | 2.5 | ○ | 29 |
| Example 7 | - | 32 | 15000 | - | - | - | 0.5 | 0.65 | 3780 | 55.4 | 13.1 | ○ | 28 |
| Comparative Example 1 | - | 34 | 30000 | - | - | - | - | 0.45 | 480 | 42 | 18.5 | × | 29 |
| Comparative Example 2 | - | 33 | 30000 | - | - | - | 0.03 | 0.47 | 680 | 41.9 | 18.7 | × | 29 |
| Comparative Example 3 | 306 | - | 4000 | - | - | - | - | 0.60 | 2320 | 41.6 | 7.5 | ○ | 27 |
| Comparative Example 4 | 310 | - | 40000 | - | - | 1.0 | - | 0.87 | 14260 | 20.9 | 7.1 | ○ | 30 |
| Comparative Example 5 | - | 33 | 30000 | - | - | - | 3.0 | - | - | - | - | × | - |
| Comparative Example 6 | - | 32 | 2500 | - | - | - | - | 0.67 | 3610 | 60.2 | 8.3 | ○ | 26 |
| Example 8 | - | 34 | 30000 | - | - | - | 0.5 | 0.59 | 1840 | 42.2 | 18.1 | ○ | 29 |
| Example 9 | - | 35 | 30000 | - | - | - | 0.5 | 0.58 | 1780 | 43.1 | 17.8 | ○ | 29 |
| Example 10 | - | 33 | 30000 | - | - | - | 1.0 | 0.91 | 18760 | 43 | 18.6 | ○ | 29 |
| Example 11 | - | 34 | 40000 | - | - | 0.5 | - | 0.60 | 2290 | 42.3 | 18.5 | ○ | 30 |
| Example 12 | - | 34 | 30000 | 20 | - | - | 0.5 | 0.59 | 1840 | 58.9 | 1.6 | ○ | 29 |
| Example 13 | - | 35 | 30000 | - | 0.1 | - | 1.0 | 0.90 | 17860 | 59.8 | 1.2 | ○ | 29 |

(continued)

| | Sb | Ge | P | Co | KS | pyromellitic acid | trimellitic acid | IV | melt viscosity | polymer color | | casting operability | LOI |
|---|---|---|---|---|---|---|---|---|---|---|---|---|---|
| | (ppm) | (ppm) | (ppm) | (ppm) | (wt%) | (mol%) | (mol%) | (dl/g) | (dPa·s) | L value | b value | | (%) |
| Comparative Example 7 | - | 33 | 30000 | - | - | - | - | 0.48 | 720 | 41.9 | 18 | × | 29 |
| Comparative Example 8 | - | 32 | 30000 | - | - | 0.03 | - | 0.49 | 870 | 42.8 | 18.1 | × | 29 |
| Comparative Example 9 | 315 | - | 4000 | - | - | - | - | 0.64 | 2910 | 42.4 | 7.7 | ○ | 27 |
| Comparative Example 10 | 305 | - | 40000 | - | - | 1.0 | - | 0.90 | 17560 | 21.2 | 6.8 | ○ | 30 |
| Comparative Example 11 | - | 34 | 30000 | - | - | - | 3.0 | - | - | - | - | × | - |
| Comparative Example 12 | - | 33 | 2500 | - | - | - | - | 0.68 | 4090 | 61.3 | 7.8 | ○ | 26 |

Through the results in Table 1, in a producing process of the present invention such as to use the phosphorus compounds (i) and (ii), phosphorus is contained at high concentration, and polyvalent carboxylic acid component and/or polyvalent polyol component are used at a specific ratio, so that polycondensation reaction rate is remarkably promoted, and mechanical properties and production operability are remarkably improved.
The use of a germanium compound also improves color tone of a polymer to be obtained, and additionally the combination of a cobalt compound or an organic fluorescent whitening agent therewith remarkably improves color tone of a polymer to be obtained.

A method of copolymerizing a large amount of an ester-forming phosphorus compound with polyethylene terephthalate has conventionally been proposed for obtaining high-degree flame retardancy. However, a phosphorus compound amount is increased for providing higher-degree flame retardancy and then there is a problem that not merely a remarkable deterioration in mechanical properties is caused and the original properties of resin are damaged but also operability in producing polyester is deteriorated.

On the contrary, in a producing process of the present invention, a germanium compound is used at a specific ratio and polyvalent carboxylic acid and/or polyvalent polyol components are further used at a specific ratio, so that color tone, mechanical properties and production operability of polyester to be obtained are remarkably improved in cooperation with the effect of improving polycondensation reaction rate and being capable of shortening polycondensation reaction time.

Therefore, polyester having excellent mechanical properties, favorable hue and high-degree flame retardancy can easily be obtained from a flame-retardant polyester according to the present invention, resulting in an extremely high industrial value.

## Claims

1. A flame-retardant polyester comprising ethylene terephthalate as a main constitutional unit and a phosphorus compound copolymerized or blended,
wherein polyvalent carboxylic acid and/or polyvalent polyol having three or more functional groups capable of forming an ester bond are contained therein by a total amount of 0.05 to 2.00 mol (a total of a dicarboxylic acid component, a diol component and the phosphorus compound is 200 mol), that the phosphorus compound having a functional group capable of forming an ester bond is contained therein by an amount of 5000 to 50000 ppm in terms of a phosphorus atom with respect to the polyester, wherein a germanium compound satisfies the following expression (a) as a polycondensation catalyst for said flame-retardant polyester,

$$10 \leq Ge \leq 500 \qquad (a)$$

(Ge denotes the content (ppm) of germanium atoms with respect to the polyester) and that a polyester pellet to be obtained has a b value of -5 to 20, an L value of 35 or more and a melt viscosity at 280°C of 1000 to 20000 dPa•s.

2. The flame-retardant polyester according to Claim 1, wherein the phosphorus compound is the general formula (1).

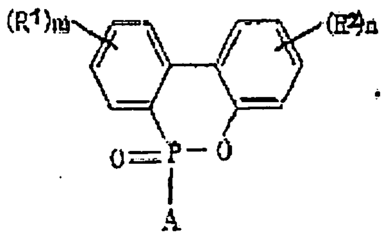

... the general formula (1)

(In the formula, $R^1$ and $R^2$ denote an organic group or a halogen atom, and m and n denote an integer of 0 to 4. In the case where m is an integer of 2 to 4, a plurality of $R^1$s may each be the same or different. In the case where n is an integer of 2 to 4, a plurality of $R^2$ s may each be the same or different. A denotes an organic group including two functional groups capable of forming an ester bond.)

**3.** The flame-retardant polyester according to Claim 1, wherein the phosphorus compound is a 2-carboxylethylphenylphosphinic acid derivative (the general formula (2)).

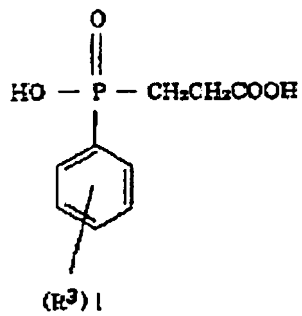

... the general formula (2)

(In the formula, $R^3$ denotes an organic group or a halogen atom, and 1 denotes an integer of 0 to 5. In the case where 1 is an integer of 2 to 5, a plurality of $R^3$s may each be the same or different.

**4.** The flame-retardant polyester according to any one of claims 1 to 3, wherein a cobalt compound is contained while satisfying the following expression (b) or the content of an organic fluorescent whitening agent is 0.0001 to 1% by weight.

$$5 \leq Co \leq 50 \quad (b)$$

(Co denotes the content (ppm) of cobalt atoms with respect to the polyester.)

**5.** A process for producing a flame-retardant polyester according to any one of Claims 1 to 4, comprising the steps of polymerizing by a batch polymerization process and extracting the polyester from a polymer can so that ΔIV during extraction becomes 0.03 or less.

**Patentansprüche**

**1.** Flammhemmender Polyester, umfassend Ethylenterephthalat als eine Hauptstruktureinheit und eine copolymerisierte oder hinzugemischte Phosphorverbindung, wobei polyvalente Carbonsäure und/oder polyvalentes Polyol mit drei oder mehr funktionellen Gruppen, die befähigt sind, eine Esterbindung zu bilden, in einer Gesamtmenge von 0,05 bis 2,00 mol (eine Gesamtheit einer Dicarbonsäurekomponente, einer Diolkomponente und der Phosphorverbindung beträgt 200 mol) darin enthalten sind, wobei die Phosphorverbindung mit einer funktionellen Gruppe, die befähigt ist, eine Esterbindung zu bilden, darin in einer Menge von 5000 bis 50000 ppm in Bezug auf ein Phosphoratom hinsichtlich des Polyesters enthalten ist, wobei eine Germaniumverbindung als ein Polykondensationskatalysator für den flammhemmenden Polyester den folgenden Ausdruck (a) erfüllt,

$$10 \leq Ge \leq 500 \qquad (a)$$

(Ge stellt den Gehalt (ppm) von Germaniumatomen hinsichtlich des Polyesters dar) und wobei ein daraus erhaltenes Polyesterpellet einen b-Wert von -5 bis 20, einen L-Wert von 35 oder mehr und eine Schmelzviskosität bei 280°C von 1000 bis 20000 dPa·s aufweist.

**2.** Flammhemmender Polyester nach Anspruch 1, wobei die Phosphorverbindung die allgemeine Formel (1) ist.

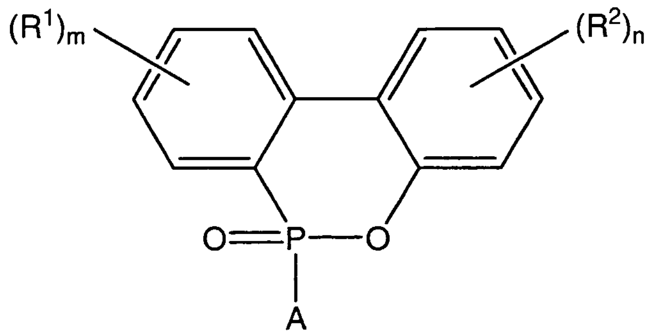

allgemeine Formel (1)

(In der Formel stellen $R^1$ und $R^2$ eine organische Gruppe oder ein Halogenatom dar und m und n stellen eine ganze Zahl von 0 bis 4 dar. Für den Fall, dass m eine ganze Zahl von 2 bis 4 ist, kann eine Mehrzahl der $R^1$ jeweils gleich oder unterschiedlich sein. Für den Fall, dass n eine ganze Zahl von 2 bis 4 ist, kann eine Mehrzahl der $R^2$ jeweils gleich oder unterschiedlich sein. A stellt eine organische Gruppe dar, die zwei funktionelle Gruppen einschließt, die befähigt sind, eine Esterbindung zu bilden.)

**3.** Flammhemmender Polyester nach Anspruch 1, wobei die Phosphorverbindung ein 2-Carboxylethylphenylphosphinsäurederivat ist (die allgemeine Formel (2)).

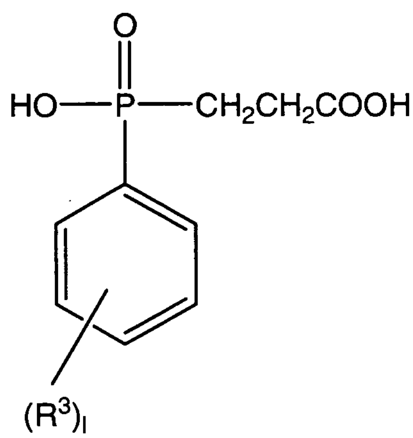

allgemeine Formel (2)

(In der Formel stellt $R^3$ eine organische Gruppe oder ein Halogenatom dar und l stellt eine ganze Zahl von 0 bis 5 dar. Für den Fall, dass l eine ganze Zahl von 2 bis 5 ist, kann eine Mehrzahl der $R^3$ jeweils gleich oder unterschiedlich sein.)

**4.** Flammhemmender Polyester nach einem der Ansprüche 1 bis 3, wobei eine Kobaltverbindung enthalten ist, während der folgende Ausdruck (b) erfüllt ist, oder wobei der Gehalt eines organischen fluoreszierenden Aufhellungsmittels 0,0001 bis 1 Gewichts-% beträgt.

$$5 \leq Co \leq 50 \qquad (b)$$

(Co stellt den Gehalt (ppm) von Kobaltatomen hinsichtlich des Polyesters dar.)

**5.** Verfahren zum Herstellen eines flammhemmenden Polyesters nach einem der Ansprüche 1 bis 4, umfassend die Schritte des Polymerisierens mittels eines Chargenpolymerisationsverfahrens und des Entnehmens des Polyesters

aus einem Polymerbehälter, so dass ΔIV während der Entnahme 0,03 oder weniger wird.

**Revendications**

1. Un polyester retardateur de flamme comprenant de l'éthylène téréphtalate en tant qu'élément constitutif principal et un composé de phosphore copolymérisé ou mélangé,
dans lequel de l'acide carboxylique polyvalent et/ou du polyol polyvalent ayant trois ou plus de groupes fonctionnels capables de former une liaison ester sont contenus dans une quantité totale de 0,05 à 2.00 mol (le total d'un composant acide dicarboxylique, d'un composant diol et du composant phosphore est de 200 mol), le composant phosphore ayant un groupe fonctionnel capable de former une liaison ester est contenu dans une quantité de 5000 à 50000 ppm en termes d'atomes de phosphore par rapport au polyester, dans lequel un composé de germanium satisfait à l'expression suivante (a) en tant que catalyseur de polycondensation pour ledit polyester retardateur de flamme,

$$10 \leq Ge \leq 500 \qquad (a)$$

(Ge indique la teneur (ppm) en atomes de germanium par rapport au polyester),
et une pastille en polyester à obtenir a une valeur b de -5 à 20, une valeur L de 35 ou plus et une viscosité à l'état fondu à 280°C de 1000 à 20000 dPa·s.

2. Le polyester retardateur de flamme selon la revendication 1, dans lequel le composé de phosphore est la formule générale (1).

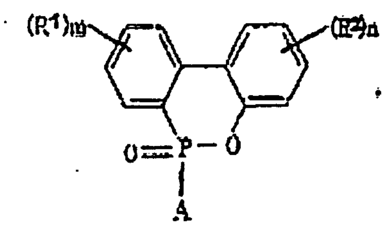

• • • la formule générale (1)

(Dans la formule, $R^1$ et $R^2$ indiquent un groupe organique ou un atome d'halogène, et m et n indiquent un entier de 0 à 4. Au cas où m est un entier de 2 à 4, une pluralité de $R^1$ peuvent être chacun les mêmes ou différents. Au cas où n est un entier de 2 à 4, une pluralité de $R^2$ peuvent être chacun les mêmes ou différents. A indique un groupe organique comprenant deux groupes fonctionnels capables de former une liaison ester.)

3. Le polyester retardateur de flamme selon la revendication 1, dans lequel le composé de phosphore est un dérivé d'acide 2-carboxyléthylphénylphosphinique (la formule générale (2)).

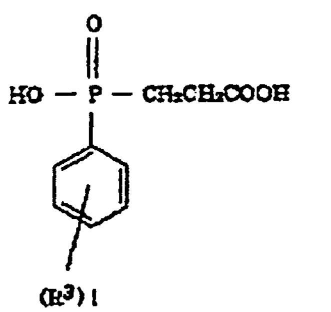

• • • la formule générale (2)

(Dans la formule, $R^3$ indique un groupe organique ou un atome d'halogène, et l iodique un entier de 0 à 5. Au cas où l est un entier de 2 à 5, une pluralité de $R^3$ peuvent être chacun les mêmes ou différents.)

**4.** Le polyester retardateur de flamme selon l'une quelconque des revendications 1 à 3, dans lequel un composé de cobalt est contenu en satisfaisant l'expression suivante (b) ou la teneur d'un agent de blanchiment fluorescent organique est de 0,0001 à 1% en poids.

$$5 \leq Co \leq 50 \qquad (b)$$

(Co indique la teneur (ppm) en atomes de cobalt par rapport au polyester.)

**5.** Un processus de production d'un polyester retardateur de flamme selon l'une quelconque des revendications 1 à 4, comprenant les étapes de polymérisation par un procédé de polymérisation discontinu et d'extraction du polyester d'un polymère de sorte que ΔIV durant l'extraction devienne 0,03 ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 49022958 A
- JP 3621050 B
- JP 389447 A
- JP 53013479 A
- JP 55041610 A
- JP 6016796 A
- JP 2001163962 A